# EUROPEAN PATENT SPECIFICATION

(11) **EP 4 367 389 B1**
(45) Date of publication and mention of the grant of the patent: **29.07.2026**
(21) Application number: 20731782.7
(22) Date of filing: 21.04.2020
(51) Int. Cl.: F03D 3/04

(54) **WIND ROUTERS FOR VERTICAL WIND TURBINES**
WINDROUTER FÜR VERTIKALE WINDTURBINEN
ROUTEURS ÉOLIENS POUR ÉOLIENNES VERTICALES

(30) Priority: 24.04.2019 BA 193312
(43) Date of publication of application: 15.05.2024
(73) Proprietor: Fondacija Mozaik, 71000 Sarajevo (BA)
(72) Inventor: FERIZOVIC TOPOLJAK, Silmija, 77000 Bihac (BA); FERIZOVIC, Samida, 77000 Bihac (BA); FERIZOVIC , Harun, 77000 Bihac (BA)
(74) Representative: Sveticic, Andrej
(86) International application number: PCT/BA2020/000003
(87) International publication number: WO 2020/215131

(56) References cited:
- WO-A1-2005/054671
- FR-A1- 3 035 454
- JP-A- 2008 106 736
- US-A1- 2004 141 845
- US-A1- 2008 085 179
- US-A1- 2011 070 068

## Description

### 1. Field of the invention

The present invention relates to wind routers for vertical wind turbines and is classified as F03D 3/00, F03D 9/00 according to the International Classification (EPC).

### 2. Technical problem

The problem of the existing Savonius turbine is a negative resistance on the convex side of the blade. This negative resistance implies that the turbine does not reach the maximum rotation that could result in no resistance. The technical problem to be solved is thus how to design such a wind router that will reduce the negative resistance on the convex side of the blade. A further objective of the present invention is to design a turbine such that it will assume an ideal position in relation to the wind direction.

### 3. Background of the invention

A similar principle of using additional wind energy was recognized by the Japanese Yuju Ohya from the Kyushu University in Japan. The technology is called "Wind Lens" and has been applied to horizontal three-axis wind turbines and is designed to increase wind power output by 2-3 times. There is no known similar solution to vertical wind turbines.

Document FR 3035454 A1 discloses a rotor with a vertical axis, similar to the "Savonius", but the blades of which are not shaped like a circle as in the "Savonius", but like a spiral or curve, a shape which considerably increases the pressure of the fluid and therefore the efficiency. This rotor is fitted with a deflector which hides the "negative" (counter-productive) blade of the rotor and directs the current towards the "positive" (productive) blade, thus considerably increasing the driving effect of the current on the rotor. The rotor-deflector assembly is insensitive to changes in the direction of the current.

### 4. Summary of the invention

The present and new vertical wind turbine with self-adjusting stationary blades is a turbine that roughly equates the HAWT horizontal turbines most used in the world today, in terms of wind power utilization. The production of vertical wind turbines and their use on the market is increasingly present for a number of reasons, advantages for a particular target market, starting with the price itself, the method of production and its efficiency. These facts were a challenge for this team, so an innovative approach to the already existing type of axial vertical wind turbine was made and a vertical wind router was added.

The technical problem was solved by a wind router according to independent claim 1. Such wind router when in use directs a part of the wind flow from the convex side of the blade to the concave side, and a part of the wind current is diverted to the side opposite to rotation, which causes a pressure that increases wind utilization. To further reduce the negative resistance on the convex side of the blade, the wind router is incorporated into the wind turbine structure that positions the turbine in an ideal position relative to the wind direction. The inventive solution to this problem is changing the construction of a standard Savonius turbine by positioning it on a secondary axle which, in addition to rotating around its own axis, also turns around the main axis on which wind routers are located, which with its specially designed design directs the turbine to an ideal position in relation to the wind direction. In this way, the negative resistance is avoided and the effect of the thrust, that is, the pulling of the rotor, directly behind the negative side of the rotor is achieved.

### Brief description of the drawings

The figures which come within the description and explanation of the invention are as follows:

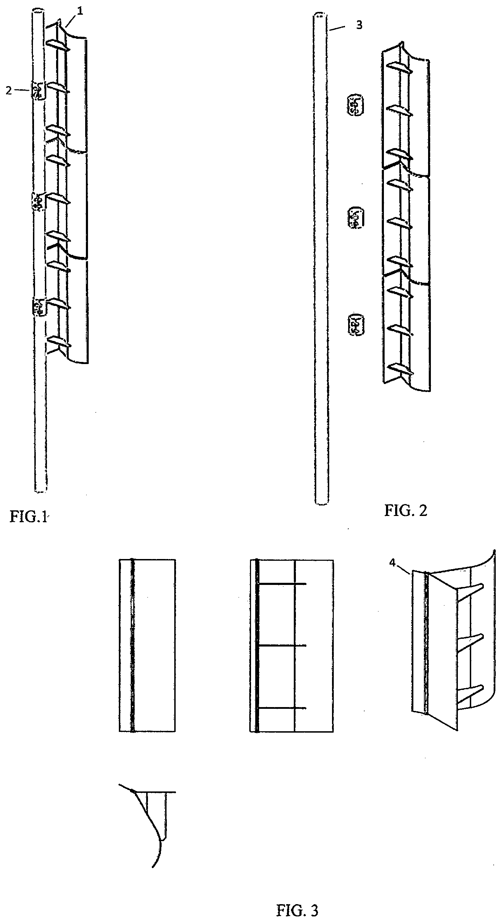

Fig. 1 is a spatial view of the main axis and the wind router,
Fig. 2 is a spatial view of the main axis and the wind router - disassembled,
Fig. 3 is a blueprint, floor plan and side elevation of a wind router with its spatial representation.

### 5. Summary of the invention

Wind routers are relatively easy to make. They are made of sheets of sheet metal that are bent at exactly the right angle, providing the wind router design that directs the turbine to an ideal position relative to the wind direction. To mount the router on the main axis, it is also necessary to create router carriers. The carriers are made of tubes of a certain cross-section and wall thickness. The router carrier is welded to the wind router and screwed to the main axis. On the back of the wind routers, movable flaps are added, which are screwed to the wind routers, and this allows additional turbine routing.

The wind router is added to the existing Savonius turbines in such a way that it is mounted on the main axis, and the turbine rotor itself is mounted onto the secondary axis which, in addition to being rotary about its axis, becomes rotary about the main axis and the router and is thus positioned in an ideal position relative to wind direction.

### 6. List of used labels and references

1 - wind router (3 pcs.)
2 - router carrier (3 pcs.)
3 - main axis (1 pc.)
4 - movable flap (3 pcs.)

## Claims

1. A wind router for a vertical wind turbine, such as a Savonius turbine, comprising a turbine rotor rotatable around a secondary axis and having rotor blades,
the wind router comprising
- a router plate bent in two portions, wherein a first portion is straight and in use directs the wind from the convex portion of the turbine rotor into the concave portion of the turbine rotor, and a second portion is slightly curved,
- **characterized in that** in use the curvature of the second portion causes a swirling flow of the wind, thereby achieving the underpressure effect in the region of the convex portion of the turbine rotor, i.e. an effect of pulling the turbine rotor, wherewith the portion of the wind encountering the convex side of the turbine rotor is redirected and positively used;
- a wind router carrier made of tubes of a certain cross-section and wall thickness, on which the router plate is welded; and
- a main axis, on which the wind router carrier is positioned by a screw connection.

2. Wind router according to claim 1, **characterized by** further comprising a movable flap (4) mounted at the point where the router plate is bent into two portions and arranged such that, in use it further positions the turbine rotor.

3. A vertical wind turbine, such as a Savonius turbine comprising a turbine rotor rotatable around a secondary axis and having rotor blades, said turbine comprising at least one wind router according to claim 1 or 2, wherein the turbine rotor is arranged in a way to be rotatable around the main axis of the wind router.

## Patentansprüche

1. Windleitvorrichtung für eine vertikale Windturbine, wie etwa eine Savonius-Turbine, die einen um eine sekundäre Achse drehbaren Turbinenrotor umfasst und Rotorblätter aufweist,
wobei die Windleitvorrichtung Folgendes umfasst
- eine Leitvorrichtungsplatte, die in zwei Teilen gebogen ist, wobei ein erster Teil gerade ist und im Gebrauch den Wind von dem konvexen Teil des Turbinenrotors in den konkaven Teil des Turbinenrotors lenkt, und ein zweiter Teil leicht gekrümmt ist,
- **dadurch gekennzeichnet, dass** im Gebrauch die Krümmung des zweiten Teils eine Wirbelströmung des Windes bewirkt, wodurch die Unterdruckwirkung im Bereich des konvexen Teils des Turbinenrotors erzielt wird, d. h. eine Sogwirkung des Turbinenrotors, durch die der auf die konvexe Seite des Turbinenrotors auftreffende Teil des Windes umgelenkt und positiv genutzt wird;
- einen Windleitvorrichtungsträger aus Rohren mit einem bestimmten Querschnitt und einer bestimmten Wandstärke, auf den die Leitvorrichtungsplatte geschweißt ist; und
- eine Hauptachse, auf der der Windleitvorrichtungsträger durch eine Schraubverbindung positioniert ist.

2. Windleitvorrichtung nach Anspruch 1, **dadurch gekennzeichnet, dass** sie ferner eine bewegliche Klappe (4) umfasst, die an dem Punkt angebracht ist, an dem die Leitvorrichtungsplatte in zwei Teile gebogen ist, und so angeordnet ist, dass sie im Gebrauch den Turbinenrotor weiter positioniert.

3. Vertikale Windturbine, wie etwa eine Savonius-Turbine, die einen um eine sekundäre Achse drehbaren Turbinenrotor umfasst und Rotorblätter aufweist, wobei die Turbine mindestens eine Windleitvorrichtung nach Anspruch 1 oder 2 umfasst, wobei der Turbinenrotor in einer um die Hauptachse der Windleitvorrichtung drehbaren Weise angeordnet ist.

## Revendications

1. Routeur éolien pour éolienne verticale, telle qu'une éolienne Savonius, comprenant un rotor de turbine rotatif autour d'un axe secondaire et ayant des pales de rotor,
le routeur éolien comprenant
- une plaque de routeur courbée en deux parties, une première partie étant droite et, en utilisation, orientant le vent de la partie convexe du rotor de turbine dans la partie concave du rotor de turbine et une seconde partie étant légèrement incurvée,
- **caractérisé en ce qu'**en utilisation, la courbure de la seconde partie provoque un écoulement tourbillonnaire du vent qui réalise l'effet de dépression au niveau dans la région de la partie convexe du rotor de turbine, c'est-à-dire un effet de traction du rotor de turbine sur laquelle la partie du vent rencontrant le côté convexe du rotor de turbine est redirigée et utilisée positivement ;
- un support de routeur éolien fait de tubes d'une certaine section et d'une certaine épaisseur de paroi sur lesquels est soudée la plaque de routeur ; et
- un axe principal sur lequel le support de routeur éolien est positionné par une liaison à vis.

2. Routeur éolien selon la revendication 1, **caractérisé en ce qu'**il comprend en outre un volet mobile (4) monté au point où la plaque de routeur est courbée en deux parties et agencé de telle sorte que, en utilisation, il positionne en outre le rotor de turbine.

3. Turbine éolienne verticale, telle qu'une éolienne Savonius comprenant un rotor de turbine pouvant tourner autour d'un axe secondaire et ayant des pales de rotor, ladite turbine comprenant au moins un routeur éolien selon la revendication 1 ou 2, le rotor de turbine étant agencé de manière à pouvoir tourner autour de l'axe principal du routeur éolien.
